# EUROPÄISCHE PATENTSCHRIFT

(11) **EP 2 222 745 B1**
(45) Veröffentlichungstag und Bekanntmachung des Hinweises auf die Patenterteilung: **10.08.2011**
(21) Anmeldenummer: 08864957.9
(22) Anmeldetag: 19.12.2008
(51) Int. Cl.: C08G 18/32, C08G 18/36, C08G 18/42, C08G 18/48, C08G 18/66, C09J 175/06

(54) **2K-PU-KLEBSTOFF ZUM VERKLEBEN VON FASERFORMTEILEN**
TWO-COMPONENT POLYURETHANE ADHESIVE FOR GLUING FIBROUS MOLDED PARTS
ADHÉSIF BICOMPOSANT À BASE DE PU POUR LE COLLAGE D'ARTICLES MOULÉS FIBREUX

(30) Priorität: 20.12.2007 DE 102007062529
(43) Veröffentlichungstag der Anmeldung: 01.09.2010
(73) Patentinhaber: Henkel AG & Co. KGaA, 40589 Düsseldorf (DE)
(72) Erfinder: SCHLINGLOFF, Nicole, 40593 Düsseldorf (DE); BOGEDAIN, Dorothee Ursula, 50181 Bedburg (DE); GANSOW, Michael, 41516 Grevenbroich (DE)
(86) Internationale Anmeldenummer: PCT/EP2008/067988
(87) Internationale Veröffentlichungsnummer: WO 2009/080740

(56) Entgegenhaltungen:
- EP-A- 1 153 997
- WO-A-2004/029121
- DE-A1- 4 114 022
- FR-A- 2 863 319

## Beschreibung

Die Erfindung betrifft einen 2-Komponenten Klebstoff auf Basis von Polyurethanen, der eine hohe Haftfestigkeit aufweist. Weiterhin soll dieser Klebstoff auch Substrate mit unebenen Oberflächen verkleben können und Spalten oder Zwischenräume fest klebend überbrücken.

In der WO2004/029121 werden 2K-PU-Klebstoffe beschrieben, die aus Polyolen auf Basis von Diolen und Triolen bestehen, die über Polyisocyanate vernetzen. Weiterhin sollen Pigmente wie hochdisperse Kieselsäure, Füllstoffen und Molekularsieb enthalten sein. Als erfindungswesentliche Komponente sind organische Säuren mit einem pKs zwischen 2,8 und 4,5 enthalten. Ein Zusatz von hochfunktionellen Polyolen zur Erhöhung der Netzwerkdichte ist nicht beschrieben. Außerdem ist es bekannt, dass Carbonsäuren in Isocyanat-vernetzenden Systemen zu einer verstärkten Blasenbildung führen können.

In der WO 2002/066572 werden 2K-PU-Klebstoffe für Holzwerkstoffe beschrieben, die bis zu 98 % oleochemische Polyole, 1 bis 7,5 % eines niedermolekularen Diols mit einer OH-Zahl zwischen 400 bis 2000, sowie 1 bis 7,5 % eines drei- bis fünffunktionellen Polyols enthält, weitere Hilfsstoffe und ein Harz, wobei der Klebstoff über Polyisocyanate vernetzbar ist.

In der EP 0794977 werden 2K-PU-Klebstoffe beschrieben, die aus Polyolen, hochdisperser Kieselsäure, Füllstoffen und Molekularsieb bestehen, die über Polyisocyanate vernetzen. Als Polyole werden Diole und Triole eingesetzt.

Die vorstehenden Klebstoffe werden für Holz und Metallverklebungen beschrieben, eine Verklebung von Kunststoffsubstraten, die auch unter Temperaturbelastung eine hohe mechanische Stabilität zeigt wird nicht beschrieben.

Ebenfalls ist es bekannt, glasfaserverstärkte Kunststoffsubstrate zu verkleben. Da solche Substrate eine hohe mechanische Stabilität zeigen, ist es wünschenswert, dass die entsprechenden Klebstoffe ebenfalls entsprechende Kräfte aufnehmen können. Beispiele für solche Verklebungen sind die Verklebung von faserverstärkten Bauteilen für Flügel oder andere Anbauteile von Flugzeugen, die Verklebung von faserverstärkten Bauteilen in der Bootsindustrie oder die Verklebung von faserverstärkten Bauteilen zur Herstellung von Flügeln für Windkraftanlagen. Die mechanischen Anforderungen an die verklebten Bauteile sind hoch. Es müssen hohe Zugkräfte aufgenommen werden, die Belastung durch permanente Schwingungen ist hoch und führt zu Materialermüdung. Weiterhin sind die Umwelteinflüsse groß, es muss eine Stabilität unter hohen Temperaturdifferenzen sichergestellt werden, sowie konstante Eigenschaften bei unterschiedlicher Feuchtigkeit. Dabei ist es bekannt, solche Bauteile mit 2K-Epoxid-Klebstoffen zu verkleben. Diese zeigen eine ausreichende Festigkeit, haben aber verschiedene Nachteile in der Verarbeitung. So sind hohe Aushärtetemperaturen notwendig, um eine ausreichende Festigkeit zu erhalten. Weiterhin müssen die Substratoberflächen für die Verklebung besonders vorbereitet werden.

Die Klebstoffe des Stands der Technik, haben den Nachteil, dass die Verklebungen unter unterschiedlichen Witterungs- und Temperaturbedingungen nicht ausreichen mechanisch stabil sind. Außerdem sind diese zum Verkleben großer Flächen weniger geeignet, da die Verarbeitungszeit bis zum Fügen der Substrate nicht ausreichend lang ist. Weiterhin sind die Klebstoffe nicht geeignet, Unebenheiten in den verklebten Substraten kraftschlüssig zu überbrücken.

Aufgabe der vorliegenden Erfindung ist es deswegen, einen Klebstoff bereitzustellen, der Kunststoffsubstrate ohne Vorbehandlung miteinander verklebt, der eine lange Offene Zeit aufweist und eine stabile Verklebung auch von unebenen Oberflächen sicherstellt. Weiterhin sollen die vernetzten Klebstoffschichten gegen Feuchtigkeit und unterschiedlicher Umgebungstemperatur unempfindlich sein und in ihren mechanischen Eigenschaften stabil bleiben.

Die Erfindung wird gelöst durch 2-Komponenten-Polyurethanklebstoff, bestehend aus einer Polyolkomponente enthaltend 2 bis 30 Gew.-% mindestens eines Polyesterdiols mit einem Molekulargewicht größer 1000 g/mol, 5 bis 35 Gew.-% mlndestens eines 3 bis 14 funktionellen Polyols, 5 bis 35 Gew.% hydrophobe Polyole, mit einer OH-Funktionalität zwischen 2, 3 und 4, ausgewählt aus Polycarbonatpolyolen, Polybutadien: polyolen oder oleochemischen Polyolen sowie 2 bis 65 Gew.% weiterer Additive oder Hilfsstoffe, wobei die Summe 100 % ergeben soll, sowie einer Isocyanatkomponente aus Polyisocyanaten einem NCO/OH-Verhältnis von 0,9;1 bis 1,5:1, wobei der vernetzte Klebstoff eine T_{g} größer 60°C aufweist.

Ein weiterer Gegenstand der Erfindung ist die Verwendung solcher 2K-PU-Klebstoffe zum Verkleben von faserverstärkten Kunststoffen, Insbesondere von faserverstärkten Bauteilen zum Herstellen von Flügeln für Windkraftanlagen.

Als Substrate sind bekannte Formkörper aus hochfesten Faserverbundwerkstoffe geeignet. Diese können beispielsweise aus Glasfasern, Kohlefasern oder Aramidfasern bestehen, die in eine Kunststoffmatrix eingebettet sind. Diese Fasern können In Form von Matten, Geweben, Vliesen oder Rovings eingebracht werden. Diese Kunststoffmatrix kann beispielsweise aus Polyestern oder Epoxiden bestehen, die über geeignete Härter und/oder Vernetzer zu einem duroplastischen Polymeren reagieren, Solche faserverstärkten Substrate sind dem Fachmann bekannt. Sie werden beispielsweise Im Flugzeugbau, Im Bootsbau oder bei anderen mechanisch hoch belasteten Bauteilen eingesetzt. Ein besonderes Anwendungsgebiet solcher verklebter Substrate sind Flügel für Windkraftrotoren. Auch die Herstellverfahren für solche Formteile sind bekannt.

Solche Flügel werden beispielsweise in Hohlformen hergestellt und vernetzt. Dabei ist die Form häufig als halbseitige Form ausgeführt. Die der Form zugewandte Seite wird Im Allgemeinen in einer glatten, einsatzbereit ausgeführten Oberfläche erhalten, die andere Seite kann und soll üblicherweise noch bearbeitet werden, Dabei werden In der weiteren Herstellung der Flügel zwei oder mehr dieser Substrate miteinander verklebt. Als zu verklebende Seite wird Im Allgemeinen die der Form abgewandte Seite eingesetzt. Die Oberfläche soll so ausgebildet sein, dass die zu verklebenden Substratteile angenähert eine Passform aufweisen. Die zum Verkleben vorgesehene Oberfläche kann rau und in sich uneben sein. Ein Schleifen oder Fräsen auf eine exakte spiegelbildliche Form zu dem zu verklebenden Gegenstück ist erfindungsgemäß nicht notwendig. Bei Verwendung des erfindungsgemäßen Klebstoffs ist auch eine Vorbehandlung der zu verklebenden Oberflächen nicht notwendig. Eine staub- und fettfreie Oberfläche ist zum Auftragen des Klebstoffs ausreichend, der Einsatz von Primern ist nicht erforderlich.

Eine bekannte Arbeitsweise ist derart, dass die Oberflächen an der äußeren Seite der Formteile nach dem Herstellen der Teile in der Form zur Vernetzung mit einem reißfesten Schutzgewebe abgedeckt werden. Dieses kann unmittelbar vor der späteren Verklebung vollständig abgezogen werden und so eine geeignete Oberfläche ergeben. Es ist aber auch möglich, solche diese Oberflächen mechanisch grob zu bearbeiten und zu an das entsprechende Gegenstück anzupassen. Auf die so vorbereiteten und von losen Teilen und Staub befreiten Oberflächen der Substrate kann dann der erfindungsgemäße Klebstoff aufgetragen werden.

Der erfindungsgemäße 2K-PU-Klebstoff ist fließfähig, er kann dabei aber insbesondere auch thixotrope Eigenschaften zeigen. Er besteht aus einer Polyolkomponente und einer Isocyanatkomponente. Diese werden unmittelbar vor der Applikation gemischt. Die Polyolkomponente muss verschiedene mehrfunktionelle Polyole enthalten. Damit soll eine ausreichende Vernetzung für eine mechanisch stabile Verklebung, auch bei thermischer Belastung sichergestellt werden. Durch die Auswahl der unterschiedlichen Polyole ist außerdem sicherzustellen, dass eine ausreichende Hydrophobie des Klebstoffs erhalten wird.

Ein Bestandteil der Polyolkomponente ist ein hydrophober Polyol. Als Polyol eignen sich beispielsweise flüssige Polyhydroxyverbindungen mit im Durchschnitt zwei bis vier Hydroxylgruppen pro Molekül. Als hydrophobe Polyole sind beispielsweise Polycarbonatpolyole geeignet. Es handelt sich dabei um Ester der Kohlensäure, die durch Reaktion von Kohlensäurederivaten, z.B. Phosgen oder Diphenylcarbonat, mit Diolen erhalten werden. Dabei sind beispielsweise niedermolekulare aliphatische Diole geeignet. Auch OH-funktionelle Polybutadiene, wie sie z.B. unter dem Handelsnamen "Poly-bd" erhältlich sind, können für die erfindungsgemäßen Zusammensetzungen als hydrophobe Polyole eingesetzt werden.

Dabei liegt das Molekulargewicht dieser Polyole im Allgemeinen zwischen 300 und 5000 g/mol, vorzugsweise im Bereich von 500 bis 3000 g/mol (zahlenmittleres Molekulargewicht M_{N}, wie durch GPC bestimmbar).

Es können aber auch hydrophobe Polyole oleochemischer Herkunft verwendet werden. Unter oleochemischen Polyolen versteht man Polyole auf Basis natürlicher Öle und Fette, z.B. die Reaktionsprodukte von epoxidierten Fettstoffen mit mono-, di- oder polyfunktionellen Alkoholen oder Glycerinester langkettiger Fettsäuren, die zumindest teilweise mit Hydroxylgruppen substituiert sind. Derartige Polyesterpolyole können beispielsweise durch vollständige Ringöffnung von epoxidierten Triglyceriden hergestellt werden, bei denen die Ringöffnung unter Erhalt der Esterbindungen ausgeführt worden ist. Als Alkohole für die Ringöffnung der epoxidierten Triglyceride können Methanol, Ethanol, Propanol, Isopropanol, Butanol, Hexanol, 2-Ethylhexanol, Fettalkohole mit 6 bis 22 C-Atomen, Cyclohexanol, Benzylalkohol, 1,2-Ethanol, 1,2-Propandiol, 1,3-Propandiol, 1,4-Butandiol. 1,6-Hexandiol, Neopentylglykol, Trimethylolpropan, Glycerin, Trimethylolethan, Pentaerythrit, Sorbit sowie ethergruppenhaltige Hydroxyverbindungen wie Alkylglykole oder oligomere Glykole sowie oligomere Glycerine eingesetzt werden.

Eine weitere Gruppe der oleochemischen Polyole sind Ringöffnungs- und Umesterungsprodukte von epoxidierten Fettsäureestern niederer Alkohole, also von epoxidierten Fettsäuremethyl-, -ethyl-, -propyl- oder-butylestern. Bevorzugt sind hier die Ringöffnungs- oder Umesterungsprodukte mit Alkoholen der Funktionalität 2 bis 4, insbesondere die Umsetzungsprodukte mit Ethylenglykol, Propylenglykol, oligomeren Ethylenglykolen, oligomeren Propylenglykolen, Glycerin, Trimethylolpropan oder Pentaerythrit.

Im Rahmen der Erfindung ist auch die Verwendung von oleochemische Polyolen möglich, die über die Umesterung von di- oder polyfunktionellen Alkoholen wie z.B. dem Additionsprodukt von Ethylenoxid oder Propylenoxid an Glycerin mit Triglyceriden, wie z.B. Palmöl, Erdnußöl, Rüböl, Baumwollsaatöl, Sojaöl, Sonnenblumenöl und Leinöl, zugänglich sind.

Besonders bevorzugt ist die Verwendung von Rizinusöl und Dimerdiolen als hydrophobe oleochemische Polyole sowie solche Polyesterpolyole, die durch vollständige Ringöffnung von epoxidierten Triglyceriden eines wenigstens teilweise olefinisch ungesättigten Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Diese oleochemischen Polyole können Hydroxylzahlen von 50 bis 400, bevorzugt 100 bis 300 aufweisen, das Molekulargewicht liegt dabei ungefähr über 500 und unter 1500g/mol.

Die OH-Funktionalität der hydrophoben Polyole soll im Durchschnitt 2, 3 bis 4 betragen, insbesondere über 2,4. Es können auch Gemische eingesetzt werden, wobei einzelne Bestandteile eine unterschiedliche Anzahl von OH-Gruppen enthalten können. Solche hydrophoben Polyole sind kommerziell erhältlich.

Die Menge der hydrophoben Polyole soll zwischen 5 bis 50 Gew.% betragen, insbesondere bis zu 35 Gew.-%. Die Menge ist auch von der Stärke der Hydrophobie der Polyole abhängig. Bezogen auf die Mischung aller Polyole soll eine hydrophobe Mischung erhalten werden.

Als weiterer notwendiger Bestandteil sind höher funktionalisierte Polyole mit 3 bis 14 OH-Gruppen, insbesondere 4 bis 9 OH-Gruppen: Diese Polyole erhöhen die Vernetzungsdichte der Polymere und ergeben eine verbesserte Kohäsion. Es kann sich dabei um Gemische von Polyolen handeln.

Beispiele für solche Polyole sind Zuckeralkohole, die eine entsprechende Anzahl von OH-Gruppen aufweisen, insbesondere Tetrite, Pentite oder Hexite oder solche auf Basis von Disacchariden. Es können auch die entsprechenden Zucker eingesetzt werden, insbesondere handelt es sich jedoch um die hydrierten Zuckeralkohole. Beispiele sind Sorbitol, Inositol, Mannitol, Threitol, Erythritol, Adonitol, Arabitol, Ribitol, Xylitol, Dulcitol, Ribose, Xylose, Lyxose, Glucose, Galactose, Mannose, Allose, Altrose, Gulose, Idose, Talose, Fructose, Sorbose, Psicose, Tegatose, Desoxyribose, Glucosamin, Galaktosamin, Rhamnose, Digitoxose, Saccharose, Lactose, Trehalose, Maltose, Cellobiose, Melibiose, Gestiobiose, Rutinose. Es können auch die entsprechenden Ethoxylierungs- und Propoxylierungsprodukte mit bis zu 15 Alkylenoxideinheiten eingesetzt werden.

Ebenfalls geeignet sind Polyole mit 4, 5 oder 6 OH-Gruppen, die mindestens eine tertiäre Aminogruppe aufweisen. Beispiele dafür sind propoxylierte oder ethoxylierte Umsetzungsprodukte von C₃ bis C₆-Diaminen oder Triaminen. Insbesondere sind Ethoxylierungs- und Propoxylierungs-Produkte von Ethylendiamin geeignet.

Das Molekulargewicht solcher höher funktionalisierter Polyole kann 120 bis 3000 g/mol betragen, insbesondere 250 bis zu 2000 g/mol.

Es können auch Polyetherpolyole eingesetzt werden. Beispiele dafür sind Umsetzungsprodukte aus 3 bis 6 funktionellen Alkoholen, die durch Umsetzung mit Ethylenoxid oder Propylenoxid hergestellt werden können, beispielsweise Polypropylenglykole. Eine weitere Gruppe von geeigneten Polyetherpolyolen sind die Polytetramethylenglykole, die z.B. durch die saure Polymerisation von Tetrahydrofuran hergestellt werden können. Dabei liegt das Molekulargewicht dieser Polyetherpolyole im Allgemeinen zwischen 200 und 6000 g/mol, vorzugsweise im Bereich von 400 bis 3000 g/mol.

Es können auch Gemische unterschiedlicher 3 bis 14 funktionellen Polyole eingesetzt werden, insbesondere sind Polyetherpolyole und Zuckerpolyole einzeln oder als Mischung geeignet.

Die höherfunktionellen Polyole tragen üblicherweise OH-Gruppen. Es ist in einer anderen Ausführungsform jedoch auch möglich, dass zumindest anteilsweise auch -SH oder-NHR-Gruppen als reaktive funktionelle Gruppen vorhanden sind.

Die höher funktionalisierten Polyole weisen durch die Anzahl der reaktiven OH- oder NH-Gruppen eine höhere Polarität auf. Sie sind teilweise mit Wasser mischbar. Die Menge der höher funktionalisierten Polyole und die hydrophoben Polyole sollen so abgestimmt sein, dass die Mischung noch hydrophoben Eigenschaften aufweist. Ist das nicht der Fall, ist eine Verarbeitung zu einem blasenfreien Klebstoff schwierig, außerdem ist die mechanische Stabilität einer Verklebung nicht bei erhöhter Luftfeuchtigkeit gewährleistet.

Ein einfacher Test zum Vergleich der hydrophoben Eigenschaften besteht darin, die Mischung der Polyole mit 1 % Wasser zu versetzten und bei 25°C homogen zu mischen. Bei Zugabe von Roh-MDI in 1:1 Mengenverhältnissen und Vermischen vernetzt eine ausreichend hydrophobe Mischung zu einem nahezu blasenfreien Polymer, bei nicht ausreichender hydrophober Wirkung entsteht ein Schaum. Eine Volumenvergrößerung um ca. 20 % ist bereits nicht mehr geeignet, es sollen keine oder nur einzelne Blasen auftreten.

Ein weiterer Bestandteil des erfindungsgemäßen 2K-PU-Klebstoffs sind Polyesterdiole auf Basis von Carbonsäuren mit Diolen. Als Polyesterdiole sind solche mit einem Molekulargewicht von etwa 1000 bis etwa 15.000 g/mol geeignet. So können beispielsweise Polyesterpolyole verwendet werden, die durch Umsetzung von niedermolekularen Alkoholen mit Lactonen entstehen. Beispiele für Alkohole sind Ethylenglykol, Diethylenglykol, Neopentylglykol, Hexandiol, Butandiol, Propylenglykol, Glycerin, Trimethylolpropan, 1,4-Hydroxymethyl cyclohexan, 2-Methyl-1,3-propandiol, Triethylenglykol, Tetraethylenglykol, Dipropylenglykol, Dibutylenglykol und den Polybutylenglykolen, Polyethylenglykolen, Polypropylenglykolen mit bis zu 10 repetetiven Einheiten.

Weitere geeignete Polyesterpolyole sind durch Polykondensatiön herstellbar, So können difunktionelle und/oder geringen Mengen an trifunktionellen Alkoholen mit einem Unterschuß an Dicarbonsäuren und/oder Tricarbonsäuren oder deren reaktiven Derivaten, zu Polyesterpolyolen kondensiert werden. Es können aromatische oder aliphatische Carbonsäuren eingesetzt werden. Geeignete Dicarbonsäuren sind beispielsweise Adipinsäure oder Bernsteinsäure und ihre höhere Homologen mit bis zu 16 C-Atomen, ferner ungesättigte Dicarbonsäuren wie Maleinsäure oder Fumarsäure, aromatische Dicarbonsäuren, Insbesondere Phthalsäure, Isophthalsäure oderTerephthalsäure. Als Tricarbonsäuren sind beispielsweise Zitronensäure oder Trimellithsäure geeignet. Die genannten Säuren können einzeln oder als Gemische aus zwei oder mehr davon eingesetzt werden. Besonders geeignet sind Polyesterpolyole aus aliphatischen Carbonsäuren mit aliphatischen linearen, verzweigten oder cycloaliphatischen Diolen, beispielsweise aus den oben erwähnten Diolen. Besonders geeignete Alkohole sind Hexandiol, Ethylenglykol, Diethylenglykol oder Neopentylglykol oder Gemische. Besonders geeignete Säuren sind solche mit 4 bis 12 C-Atomen, wie Bernsteinsäure, Azelainsäure, Korksäure, Sebacinsäure oder Adipinsäure oder deren Gemische.

Die Polyesterdiole sollen einen niedrigen Schmelzpunkt aufweisen oder bei Raumtemperatur flüssig sein. Das Molekulargewicht kann bevorzugt zwischen 1500 bis 8000 g/mol betragen. Die Polyole können eine Funktionalität von ca. 1,8 bis 2,2 aufweisen, im Allgemeinen sollen sie als Diole vorliegen. Die Polyesterdiole sind vorteilhaft, da sie eine Mischbarkeit der hydrophoben und polaren Polyole fördern.

Die Polyolkomponente soll 2 bis 30 Gew.-% mindestens eines Polyesterpolyols enthalten, 5 bis 50 Gew.-% hydrophobe Polyole mit einer OH-Funktionalität zwischen 2, 3 und 4 ausgewählt aus Polycarbonatpolyolen, Polybutadienpolyolen oder oleochemischen Polyolen sowie 5 bis 35 Gew.% polyfunktionelle Polyole mit 3 bis 14 OH-Gruppen, sowie 2 bis 65 Gew.-% Additive oder Hilfsstoffe. Eine bevorzugte Ausführungsform soll 5 bis 20 Gew.-% Polyesterpolyole, 10 bis 30 Gew.-% hydrophobe Polyole 10 bis 30 Gew.-% polyfunktionelle Polyole sowie Additive enthalten. Dabei soll die Summe der Prozentzahlen der Polyolkomponente 100 % ergeben.

Die verschiedenen Polyolbestandteile beeinflussen die notwendigen Eigenschaften des vernetzten Klebstoffs. Ist die Menge der Polyole mit 3 bis 14 OH-Gruppen zu gering, wird keine ausreichende Kohäsion des Klebstoffs erhalten. Es wird über die Menge dieser Polyole die Vernetzungsdichte des Klebstoffs beeinflusst, weiterhin beeinflusst sie die Glasübergangstemperatur. Ist die Menge der hydrophoben Polyole nicht ausreichend, können bei der Verklebung mechanische Schäden, wie Gasblasen hervorgerufen werden. Weiterhin kann die für die Verarbeitung notwendige offene Zeit negativ beeinflusst werden.

Als Polyisocyanate in der Isocyanatkomponente sind mehrfach funktionelle Isocyanate geeignet. Vorzugsweise enthalten die geeigneten Isocyanate im Mittel 2 bis 5, vorzugsweise bis 4 NCO-Gruppen. Beispielsweise für geeignete Isocyanate sind 1,5-Naphthylendi- isocyanat, 2,4- oder 4,4'-Diphenylmethandiisocyanat (MDI), hydriertes MDI (H12MDI), Xylylendiisocyanat (XDI), m- und p-Tetramethylxylylendiisocyanat (TMXDI), 4,4'-Diphenyldimethylmethandiisocyanat, Di- und Tetraalkyldiphenyl-methandiisocyanat, 4,4'-Dibenzyldiisocyanat, 1,3-Phenylendiisocyanat, 1,4-Phenylendiisocyanat, die Isomere des Toluylendiisocyanats (TDI), 1-Methyl-2,4-diisocyanato-cyclohexan, 1,12-Diisocyanatododecan, 1,6-Diisocyanato-2,2,4-trimethylhexan, 1,6-Diisocyanato-2,4,4-trimethylhexan, 1-Isocyanatomethyl-3-isocyanato-1,5,5-trimethyl-cyclohexan (IPDI), Tetramethoxy-butan-1,4-diisocyanat, Butan-1,4-diisocyanat, Hexan-1,6-diisocyanat (HDI), Dimerfettsäure-diisocyanat, Dicyclohexylmethandüsocyanat, Cyclohexan-1,4-diisocyanat, Ethylen-diisocyanat oder Phthalsäure-bis-isocyanatoethylester.

Es können auch niedermolekulare Prepolymere eingesetzt werden, also Oligomere mit mehreren Isocyanatgruppen, d.h. Umsetzungsprodukte von MDI bzw. TDI mit niedermolekularen Diolen, wie z.B. Ethylenglykol, Diethyenglykol, Propylenglykol, Dipropylenglykol oder Triethylenglykol. Diese Oligomere werden mit einem Überschuss von monomerem Polyisocyanat in Gegenwart von Diolen erhalten. Dabei liegt das Molekulargewicht der Diole im Allgemeinen unterhalb von 1500 g/mol. Ggf. kann das Umsetzungsprodukt durch Destillation von Monomeren befreit werden. Auch Isocyanurate und Biurete von Isocyanaten, beispielsweise von HDI oder IPDI, sind geeignet, ebenso wie das mit Carbodiimid verflüssigte Diphenylmethandiisocyanat oder Roh-MDI.

Es können aliphatische und cycloaliphatische Polyisocyanate eingesetzt werden, diese können in ihrer Reaktivität durch erhöhte Temperaturen oder Katalysatoren gesteigert werden. Vorzugsweise werden jedoch aromatische Polyisocyanate bevorzugt, ebenso oligomerisierte NCO-endständige Addukte aus den oben genannten aromatischen Isocyanaten und niedermolekularen Diolen. Vorzugsweise sollen die Polyisocyanate bei Raumtemperatur fließfähig sein.

Die erfindungsgemäßen Zweikomponenten-Polyurethan-Klebstoffe können weiterhin Hilfsstoffe enthalten, die vorzugsweise ganz oder teilweise der Polyolkomponente zugemischt werden. Darunter werden Stoffe verstanden, die in der Regel in kleinen Mengen zugesetzt werden, um die Eigenschaften des Klebstoffs in gewünschter Richtung zu verändern, z.B. Viskosität, Benetzungsverhalten, Stabilität, Reaktionsgeschwindigkeit, Blasenbildung, Lagerfähigkeit oder Haftung, und auch Gebrauchseigenschaften dem Anwendungszweck anzupassen. Beispiele für Hilfsstoffe sind Füllstoffe, Verlaufmittel, Entlüfter, Thixotropiermittel, Katalysatoren, Alterungsschutzmittel, Farbstoffe, Trockenmittel, Harze, Weichmacher und Netzmittel.

Es können auch Katalysatoren verwendet werden, beispielsweise bei der Verwendung von aliphatischen Isocyanaten. Als Katalysatoren werden die üblichen, in der Polyurethan-Chemie bekannten, metallorganischen Verbindungen eingesetzt, wie z.B. Eisen- oder auch insbesondere Zinn-Verbindungen. Beispiele hierfür sind 1,3-Dicarbonyl-Verbindungen des Eisens, wie Eisen (III)acetylacetonat, sowie insbesondere die zinnorganischen Verbindungen des 2- bzw. 4-wertigen Zinns, insbesondere die Sn(II)-Carboxylate bzw. die Dialkyl-Sn(IV)-Dicarboxylate oder die entsprechenden Dialkoxylate, wie z.B. Dibutylzinndilaurat, Dibutylzinndiacetat, Dioctylzinndiacetat, Dibutylzinnmaleat, Zinn(II)-Octoat. Insbesondere können tertiären Amine oder Amidine als Katalysatoren eingesetzt werden, ggf. in Kombination mit den oben genannten Zinnverbindungen. Als Amine kommen dabei sowohl acyclische als auch insbesondere cyclische Verbindungen in Frage. Beispiele sind das Tetramethylbutandiamin, Bis(dimethylaminoethyl)ether, 1,4-Diaza-bicyclooctan (DABCO), 1,8-Diaza-bicyclo-(5.4.0)-Undecen, 2,2'-Dimorpholinodiethylether, Dimethylpiperazin oder Mischungen der vorgenannten Amine. Eine andere bevorzugte Ausführungsform des erfindungsgemäßen 2K-PU-Klebstoffs arbeitet katalysatorfrei.

Weiterhin kann der erfindungsgemäße Klebstoff ggf. zusätzlich Stabilisatoren enthalten. Als Stabilisatoren im Sinne dieser Erfindung sind Antioxidantien, UV-Stabilisatoren oder Hydrolyse-Stabilisatoren zu verstehen. Beispiele hierfür sind die handelsüblichen sterisch gehinderten Phenole und/oder Thioether und/oder substituierten Benzotriazole und/oder Amine vom "HALS"-Typ (Hindered Amine Light Stabilizer).

Weiterhin können ggf. Harze enthalten sein. Dabei kann es sich um natürliche Harze handeln oder um synthetische Harze. Beispiele dafür sind Schellack, Kolophonium, Tallharze, Balsamharze oder Wurzelharze, Kohlenwasserstoff-, Terpen-, Cumaron/Inden-, Furan-, Alkyd-, Glycerinester-, Hamstoff-, Melamin-, PolyamidHarze, insbesondere auch Aldehyd-, Keton- oder Phenolharze. Die Harze haben im allgemeinen einen niedrigen Schmelzpunkt und sind unter anderem für eine verbesserte Verträglichkeit der Komponenten vorteilhaft. Eine besondere Ausführungsform setzt OH-Gruppen-haltige Harze ein, insbesondere mit mehreren OH-Gruppen. Diese können dann auch mit den Isocyanaten reagieren können. In einer bevorzugten Ausführungsform kann die Menge zwischen 5 bis 30 Gew.-% betragen.

Die erfindungsgemäßen Zusammensetzungen können außerdem noch weitere, an sich bekannte Hilfs- und Zusatzmittel enthalten, wie z.B. Weichmacher, Thixotropiermittel, Farbpasten oder Pigmente. Als Füllstoffe geeignet sind gegenüber Isocyanaten nicht reaktive anorganische Verbindungen. Beispiele für geeignete Füllstoffe und Pigmente sind natürliche, gemahlene Kreide gefällte Kreide, Schwerspat, Talk, Glimmer, Ruß, Titandioxid, Eisenoxide, Aluminiumoxid, Zinkoxid, Zinksulfat oder Siliziumdioxid. Es können auch wasserabsorbierende Pulver, beispielsweise Zeolith, als Füllstoff enthalten sein. Die Füllstoffe sollen fein verteilt vorliegen, beispielsweise von 1 bis 200 µm, insbesondere bis 50 µm, es kann sich aber auch um nanoskalige Pigmente handeln. Die Menge der Füllstoffe und Pigmente soll von 0 bis 60 Gew.-% betragen insbesondere von 5 bis 40 Gew.-%. Die Menge der Füllstoffe beeinflusst die Härte des vernetzten Klebstoffs. Ebenso kann über Menge und Auswahl des Füllstoffs die Viskosität beeinflusst werden.

Die Additive werden so ausgewählt, dass sie keine Reaktionen oder Nebenreaktionen mit den Isocyanaten eingehen, zumindest nicht in der Zeitdauer der Vernetzungsreaktion. Insbesondere sollen keine Additive zugegeben werden, beispielsweise Carbonsäuren, die eine Blasenbildung im Klebstoff fördern. Der erfindungsgemäße Klebstoff soll weiterhin bevorzugt keine organischen, beispielsweise bei Temperaturen bis zu 120°C flüchtigen, Lösemittel enthalten. Auch Weichmacher sollen insbesondere nicht vorhanden sein.

Das Verhältnis der in der Isocyanatkomponente enthaltenen Isocyanatgruppen zu den in der Polyolkomponenten enthaltenen OH-Gruppen liegt in der Regel im Bereich der Äquivalenz, wobei im Hinblick auf an der Oberfläche vorhandene Feuchtigkeit ein geringer Überschuß an Isocyanat-Gruppen zweckmäßig ist. Das NCO/OH-Verhältnis soll zwischen 0,90:1 und 1,5:1 betragen, insbesondere 1,0:1 bis 1,3:1.

Zur Herstellung des erfindungsgemäßen 2K-Polyurethan-Klebstoffes wird zunächst die Polyolkomponente hergestellt. Dazu können die flüssigen Polyole gemischt werden, anschließend sind gegebenenfalls feste Anteile in der Mischung zu lösen. Das kann auch durch Erwärmen unterstützt werden. Anschließend werden die Hilfsstoffe zugemischt und dispergiert. Dabei soll der Feuchtigkeitsgehalt niedrig gehalten werden, beispielsweise kann Wasser durch die Verwendung von Molekularsieben vermindert werden. Inerte Hilfsstoffe können auch teilweise der Isocyanat-Komponente zugemischt werden. Die zwei Komponenten werden bis zu ihrer Anwendung getrennt gelagert. Zur Anwendung werden diese beiden Komponenten in an sich bekannter Weise miteinander gemischt und das Gemisch auf die zu verklebenden Substrate aufgetragen.

Der erfindungsgemäße Klebstoff soll bei Verarbeitungstemperatur, d.h. zwischen 10 bis 40°C, eine flüssige bis pastöse Form besitzen. Er soll als Film oder als Raupe aufgetragen werden können und dabei nicht auf dem Substrat zerfließen. Die erfindungsgemäße Klebstoffmischung ist insbesondere thixotrop.

Da häufig große Flächen verklebt werden müssen und um eine genaue Ausrichtung der zu verklebenden Substratteile zu ermöglichen, ist eine lange Offene Zeit erforderlich. Erfindungsgemäß wird eine offene Zeit von mehr als 30 min. erzielt, insbesondere von über 60 min. Unter Offener Zeit wird der Zeitraum verstanden, der nach der vollständigen Vermischung des 2K-Klebstoffs zur sachgerechten Verarbeitung verbleibt, bevor die Konsistenz des Klebstoffs durch einsetzende Reaktion sich so verändert hat, dass eine Applikation, das Anfließen auf dem Substrat und eine gute Adhäsion nicht mehr erzielt werden kann. Dabei kann die Veränderung der Klebstoffzusammensetzung durch beabsichtigte Vernetzungsreaktionen geschehen, es können jedoch auch Nebenreaktionen die Topfzeit negativ beeinflussen.

Die lange Offene Zeit kann über die Menge der hydrophoben Alkohole beeinflusst werden. Ist die Menge der hydrophoben Polyole zu gering, ist keine ausreichende Offene Zeit festzustellen. Der Klebstoff vernetzt rasch und es ist Blasenbildung zu beobachten. Weiterhin wird über dem Katalysator die Reaktionsgeschwindigkeit und die Offene Zeit beeinflusst. Der Wassergehalt der Polyolkomponente soll weniger als 2 Gew.-% betragen, insbesondere weniger als 1 Gew.-%, bevorzugt weniger als 0,5 Gew.-%.

Durch die Auswahl der Bestandteile soll der erfindungsgemäße Klebstoff eine Glasübergangstemperatur (T_{g}) von 50°C bis 130°C aufweisen (gemessen mit DSC, DIN 11357), insbesondere von 60 bis 110°C. Die hohe T_{g} ist notwendig, um die geforderte mechanische Stabilität zu erhalten. Durch die erfindungsgemäße Auswahl der hydrophoben Polyole und der polyfunktionellen Polyol wird eine hohe mechanische Stabilität des vernetzten Klebstoffs erhalten. Die erfindungsgemäß geeigneten Klebstoffe ergeben nach Vernetzung ein hydrophobes Netzwerk. Dabei zeigt sich, dass eine nicht ausreichende Menge der hydrophoben Alkohole zu einer nicht konstanten T_{g} bei Feuchtigkeitsbelastung führt. Erfindungsgemäß soll die Glasübergangstemperatur nach einer Wasserlagerung eines Prüfkörpers (1000h, destilliertes Wasser, 25°C) maximal 20 % von dem Ausgangswert abweichen.

In einer weiteren Ausführungsform ist es möglich, dass der Klebstoff mindestens zwei Glasübergangstemperaturen aufweist. Dabei soll die zweite Glasübergangstemperatur unterhalb der ersten Glasübergangstemperatur liegen. Beispielsweise kann diese zweite T_{g} in einem Temperaturbereich von - 50°C bis + 70 °C liegen, insbesondere von -10°C und + 40°C.

Die Strukturstabilität der Verklebung kann beispielsweise über den E-Modul gemessen werden. Durch die erfindungsgemäße Zusammensetzung wird sichergestellt, dass dieser bei einer Messtemperatur von -10°C und + 70°C größer 1000 MPa beträgt (analog DIN EN ISO 527).

Der erfindungsgemäße 2K- PU-Klebstoff kann insbesondere zum Verkleben von Faserverbundwerkstoffen eingesetzt werden. Dabei werden die Substrate als Formteil hergestellt. Die zu verklebende Oberfläche soll dabei frei von Verunreinigungen sein, sie kann direkt aus dem Herstellungsprozess eingesetzt werden. Üblich ist auch ein vorläufiger Schutz solcher Oberflächen durch ein Schutzgewebe, das dann vor der weiteren Verarbeitung entfernt wird. Auf diese Oberfläche wird der erfindungsgemäße Klebstoff schichtförmig, raupenartig oder punktförmig aufgetragen. Die Schichtdicke kann bis zu 2 cm betragen. Danach wird das weitere Substrat aufgebracht, ausgerichtet und ggf. angepresst und fixiert. Dabei verteilt sich der noch fließfähige Klebstoff gleichmäßig über die Substratfläche. Durch die hohe Schichtdicke kann sichergestellt werden, dass auch Unebenheiten der zu verklebenden Oberflächen mit Klebstoff ausgeglichen werden und ein flächiger Kontakt der Substrate erfolgt.

Danach wird die Verklebung ausgehärtet. Das kann bei Umgebungstemperatur erfolgen, ggf. kann die Vernetzung auch durch erhöhte Temperaturen bis zu 90°C beschleunigt werden. Der erfindungsgemäße Klebstoff weist nach Vernetzung eine hohe mechanische Festigkeit auf. Eine Verklebung zeigt eine Scherfestigkeit von über 15 MPa gemessen nach DIN EN 1465.

Es kann für eine Verbesserung der Verklebung vorteilhaft sein, nach der Vernetzung des Klebstoffs die verklebten Substrate einem Temperungsprozess zu unterwerfen. Dabei soll die Klebestelle des Bauteils für einen Zeitraum zwischen 30 min und 24 Stunden gleichmäßig auf eine erhöhte Temperatur zwischen 40 bis 100°C gebracht werden. Unabhängig von einer Theorie wird angenommen, dass dabei eine innere Ordnung der Vernetzungsstellen und kristallinen Bereiche erhalten wird, die so zu stabilen Eigenschaften der Klebstoffschicht führen. Durch die Verwendung der erfindungsgemäßen 2K-PU-Klebstoffe eine Verringerung der Vernetzungszeit oder der notwendigen Temperatur ermöglicht. Damit wird auch die Belastung der Verbundwerkstoffe im Herstellprozess verringert. Ebenso kann das Tempern eingeschränkt oder vermieden werden.

Die erfindungsgemäßen Klebstoffe sind nach Aushärtung auch unter erhöhten Temperaturen mechanisch stabil. So können Lücken, Spalten oder Hohlräume bis zu 2 mm von dem Klebstoff gefüllt werden und eine feste Verklebung ergeben. Die Verklebung ist auch unter wechselnden Belastungen stabil, die bei der Verwendung solcher Flügel als Rotor auftritt. Die durch unterschiedliche Umwelteinflüsse hervorgerufenen Schwingungen, Änderungen der Temperatur oder erhöhten Feuchtigkeitsbelastung, führen nicht zu einer Schwächung der Verklebung.

Die folgenden Beispiele erläutern die Erfindung.
Polyesterpolyol A: Molekulargewicht = 2000; aus Adipinsäure umgesetzt mit Butandiol und Hexandiol; f = 2
Hydrophober Polyol : Rizinusöl
Polyol B1 : Molekulargewicht = 700 ; Polyetherpolyol; f = 3
Polyol B2 : N,N,N'N" Tetra(2-hydroxypropyl)ethylendiamin; f = 4

Die Bestandteile der Polyolkomponente (Gewichtsmenge) werden bei Raumtemperatur gemischt. Zur Herstellung des Klebstoffs wird die Polyolkomponente mit dem Isocyanat vermischt und innerhalb von 30 min. geeignete Probekörper hergestellt und danach ausgehärtet.

Härtung : 48 h bei 40°C,

| Beispiel | 1 | 2 |
|---|---|---|
| Ausgangsmaterial | | |
| Polyolkomponente | | |
| Rizinusöl | 30 | 30 |
| Polyol B1 | 25 | ./. |
| Polyol B2 | ./. | 10 |
| Polyesterpolyol A | 13 | 14 |
| Calciumcarbonat | 20 | 20 |
| Aerosil R 202 | 5 | 4 |
| DABCO | 0,5 | 0,5 |
| Stabilisatoren | 0,5 | 0,5 |
| Zeolite | 3,0 | 2,0 |
| | | |
| Isocyanatkomponente | | |
| Roh MDI | NCO:OH 1,05 | NCO:OH 1,05 |

| | 1 | 2 |
|---|---|---|
| E-Modul (ca.) | 2000 MPa | 2200 MPa |
| T_{g} | 55°C | 60°C |
| T_{g} (nach Wasserlagerung) | ca. 45°C | ca. 50°C |

Eine Schicht der Polyolkomponente wird 1 % Wasser vermischt, danach mit der gleichen Menge MDI gemischt und als Körper ca. 1 cm Dicke, 5 cm Durchmesser bei Raumtemperatur ausgehärtet. Es entsteht ein fester Körper, der nur wenige Blasen aufweist.

### Beispiel 3 (Vergleich)

Es wurde eine Zusammensetzung gemäß Beispiel 1 hergestellt mit der Maßgabe, dass Rizinusöl (hydrophober Polyol) ersetzt wurde durch eine entsprechende Menge eines Polyethylenglykols (Molekulargewicht ca. 1000, 3 funktionell). Die Menge Zeolit wurde auf 1 abgesenkt.

Bei der Aushärtung zeigt sich, dass eine dicke Klebstoffraupe Blasen aufwies und dadurch mechanisch nicht stabil war.

Eine Mischung der Polyolkomponenten mit 1 % Wasser sowie mit der gleichen Menge Isocyanat vermischt, härtete ebenfalls unter kräftiger Blasenbildung aus.

### Beispiel 4 (Vergleich)

Eine Mischung gemäß Beispiel 2 wird hergestellt. Der Polyol B wird durch einen Polyetherdiol (Molekulargewicht 800) ersetzt.

Der Klebstoff härtet aus. Es zeigt sich jedoch, dass die Glasübergangstemperatur einen Wert unter 40°C aufweist. Die mechanischen Eigenschaften des Klebstoffs (z.B. Elastizitätsmodul) waren nicht ausreichend.

## Patentansprüche

1. 2-Komponenten-Polyurethanklebstoff bestehend aus einer Polyolkomponente enthaltend
a) 2 bis 30 Gew.-% mindestens eines Polyesterdiols mit einem Molekulargewicht größer 1000 g/mol.
b) 5 bis 35 Gew.-% mindestens eines 3 bis 14 funktionellen Polyols
c) 5 bis 35 Gew.% hydrophobe Polyole mit einer OH-Funktionalität zwischen 2,3 und 4 ausgewählt aus Polycarbonatpolyolen, Polybutadienpolyolen oder oleochemischen Polyolen
d) 2 bis 65 Gew.-% weitere Additive oder Hilfsstoffe, wobei die Summe 100 % ergeben soll, sowie einer Isocyanatkomponente aus Polyisocyanaten in einem NCO/OH-Verhältnis von 0,9:1 bis 1,5:1, wobei der vernetzte Klebstoff eine Tg größer 50°C aufweist.

2. 2-K-PU-Klebstoff nach Anspruch 1, **dadurch gekennzeichnet, dass** als hydrophober Polyol Rizinusöl oder Dimerdiole eingesetzt werden.

3. 2-K-PU-Klebstoff nach einem der Ansprüche 1 oder 2, **dadurch gekennzeichnet, dass** der Polyesterdiol aus niedermolekularen linearen aliphatischen, cycloaliphatischen und/oder verzweigten Diolen und aliphatischen Dicarbonsäuren aufgebaut ist, mit einem Molekulargewicht bis 15000 g/mol, insbesondere von 1500 bis 8000 g/mol.

4. 2-K-PU-Klebstoff nach einem der Ansprüche 1 bis 3, **dadurch gekennzeichnet, dass** der Polyol b) ein 3 bis 9 OH-Gruppen aufweisender Polyol ist, ausgewählt aus Zuckeralkoholen, Polyetherpolyolen oder aminogruppenhaltigen Polyolen.

5. 2-K-PU-Klebstoff nach einem der Ansprüche 1 bis 3, **dadurch gekennzeichnet, dass** als Additiv Harze enthalten sind, insbesondere Harze, die eine oder mehrere OH-Gruppen aufweisen.

6. 2-K-PU-Klebstoff nach einem der Ansprüche 1 bis 4, **dadurch gekennzeichnet, dass** aromatische Polyisocyanate eingesetzt werden.

7. 2-K-PU-Klebstoff nach einem der Ansprüche 1 bis 5, **dadurch gekennzeichnet, dass** der Klebstoff frei von Lösemitteln ist, insbesondere auch frei von Weichmachern.

8. 2-K-PU-Klebstoff nach einem der Ansprüche 1 bis 6, **dadurch gekennzeichnet, dass** der vernetzte Klebstoff eine T_{g} größer 60°C und unterhalb 130°C aufweist.

9. 2-K-PU-Klebstoff nach Anspruch 8, **dadurch gekennzeichnet, dass** der vernetzte Klebstoff hydrophobe Eigenschaften aufweist, so dass nach Wasserlagerung die Glasübergangstemperatur T_{g} weniger als 20 % vom Ausgangswert abweicht.

10. 2-K-PU-Klebstoff nach einem der Ansprüche 1 bis 9, **dadurch gekennzeichnet, dass** der vernetzte Klebstoff eine zweite T_{g} aufweist, die unterhalb der ersten T_{g} liegt.

11. 2-K-PU-Klebstoff nach einem der Ansprüche 1 bis 10, **dadurch gekennzeichnet, dass** der Klebstoff nach Vernetzung einen E-Modul über 1000 MPa bei einer Temperatur zwischen -10°C und 70°C aufweist.

12. Verwendung eines 2K-PU-Klebstoffs nach Anspruch 1 bis 11 zum Verkleben von Metall-, Kunststoff- oder Schaumstoffsubstraten oder Faserverbundwerkstoffen.

13. Verwendung nach Anspruch 12 zum Verkleben von Formteilen auf Basis von Glasfasern, Kohlefasern, Textilfaser in einer Polyester- oder Polyepoxidmatrix.

14. Verwendung nach Anspruch 12 oder 13 zum Verkleben von Formteilen mit unebener Oberfläche.

## Claims

1. A two-component polyurethane adhesive consisting of a polyol component containing
a) 2 to 30% by weight of at least one polyester diol with a molecular weight of more than 1,000 g/mol.
b) 5 to 35% by weight of at least one three- to fourteen-functional polyol,
c) 5 to 35% by weight of hydrophobic polyols with an OH functionality between 2.3 and 4, selected from polycarbonate polyols, polybutadiene polyols, or oleochemical polyols
d) 2 to 65% by weight of further additives or adjuvants, wherein the sum should result in 100%, as well as an isocyanate component consisting of polyisocyanate in an NCO/OH ratio from 0.9:1 to 1.5:1, wherein the cross-linked adhesive has a T_{g} above 50°C.

2. The two-component polyurethane adhesive according to claim 1, **characterized in that** castor oil or dimeric diols are used as a hydrophobic polyol.

3. The two-component polyurethane adhesive according to any of claims 1 or 2, **characterized in that** the polyester diol is built out of low molecular linear aliphatic, cycloaliphatic and/or branched diols and aliphatic dicarboxylic acids, with a molecular weight up to 15,000 g/mol, in particular from 1,500 to 8,000 g/mol.

4. The two-component polyurethane adhesive according to any of claims 1 to 3, **characterized in that** the polyol b) is a polyol having 3 to 9 OH groups, selected from sugar alcohols, polyether polyols or polyols containing amino groups.

5. The two-component polyurethane adhesive according to any of claims 1 to 3, **characterized in that** in particular, resins, which have one or several OH groups, are contained as an additive.

6. The two-component polyurethane adhesive according to any of claims 1 to 4, **characterized in that** aromatic polyisocyanates are used.

7. The two-component polyurethane adhesive according to any of claims 1 to 5, **characterized in that** the adhesive is free of solvents, also in particular free of plasticizers.

8. The two-component polyurethane adhesive according to any of claims 1 to 6, **characterized in that** the cross-linked adhesive has a T_{g} above 60°C and below 130°C.

9. The two-component polyurethane adhesive according to claim 8, **characterized in that** the cross-linked adhesive has hydrophobic properties, so that after water storage the glass transition temperature T_{g} deviates by less than 20% of the initial value.

10. The two-component polyurethane adhesive according to any of claims 1 to 9, **characterized in that** the cross-linked adhesive has a second T_{g}, which lies below the first T_{g}.

11. The two-component polyurethane adhesive according to any of claims 1 to 10, **characterized in that** the adhesive after cross-linking has an elastic modulus of more than 1,000 MPa at a temperature comprised between -10°C and 70°C.

12. Use of a two-component-PU adhesive according to claim 1 to 11 for gluing metal, plastic or foam substrates or composite fiber materials.

13. The use according to claim 12 for gluing molded parts based on glass fibers, carbon fibers, textile fibers in a polyester or polyepoxide matrix.

14. The use according to claim 12 or 13 for gluing molded parts with an uneven surface.

## Revendications

1. Adhésif de polyuréthane à 2 composants, constitué par un composant de polyol contenant :
a) au moins un polyesterdiol dont le poids moléculaire est supérieur à 1000 g/mol, à concurrence de 2 à 30 % en poids ;
b) au moins un polyol possédant une fonctionnalité de 3 à 14, à concurrence de 5 à 35 % en poids ;
c) des polyols hydrophobes dont la fonctionnalité OH se situe entre 2,3 et 4, choisi parmi des polycarbonatepolyols, des polybutadiènepolyols ou des polyols oléochimiques, à concurrence de 5 à 35 % en poids ;
d) d'autres additifs ou adjuvants, à concurrence de 2 à 65 % en poids, la somme devant donner 100 %, ainsi qu'un composant d'iisocyanate constitué par des polyisocyanates dans un rapport des groupes NCO/OH de 0,9:1 à 1,5:1, l'adhésif à l'état réticulé présentant une valeur Tg supérieure à 50 °C.

2. Adhésif de polyuréthane à 2 composants selon la revendication 1, **caractérisé en ce qu'**on met en oeuvre, à titre de polyol hydrophobe, de l'huile de ricin ou des diols dimères.

3. Adhésif de polyuréthane à 2 composants selon l'une quelconque des revendications 1 ou 2, **caractérisé en ce que** le polyesterdiol se compose de diols aliphatiques linéaires, cycloaliphatiques et/ou ramifiés à bas poids moléculaires et/ou de diols ramifiés et d'acides dicarboxyliques aliphatiques, dont le poids moléculaire s'élève jusqu'à 15000 g/mol, en particulier de 1500 à 8000 g/mol.

4. Adhésif de polyuréthane à 2 composants selon l'une quelconque des revendications 1 à 3, **caractérisé en ce que** le polyol b) est un polyol présentant de 3 à 9 groupes OH, choisi parmi des alcools de sucre, des polyétherpolyols ou des polyols contenant des groupes amino.

5. Adhésif de polyuréthane à 2 composants selon l'une quelconque des revendications 1 à 3, **caractérisé en ce qu'**il contient à titre d'additif, des résines en particulier des résines qui présentent un ou plusieurs groupes OH.

6. Adhésif de polyuréthane à 2 composants selon l'une quelconque des revendications 1 à 4, **caractérisé en ce qu'**on met en oeuvre des polyisocyanates aromatiques.

7. Adhésif de polyuréthane à 2 composants selon l'une quelconque des revendications 1 à 5, **caractérisé en ce que** l'adhésif est exempt de solvants, en particulier également exempt de plastifiants.

8. Adhésif de polyuréthane à 2 composants selon l'une quelconque des revendications 1 à 6, **caractérisé en ce que** l'adhésif à l'état réticulé présente une T_{g} supérieure à 60 °C et inférieure à 130 °C

9. Adhésif de polyuréthane à 2 composants selon la revendication 8, **caractérisé en ce que** l'adhésif à l'état réticulé présente des propriétés hydrophobes, si bien qu'après immersion dans l'eau, la température de transition vitreuse T_{g} s'écarte de la valeur de départ à concurrence de moins de 20 %.

10. Adhésif de polyuréthane à 2 composants selon l'une quelconque des revendications 1 à 9, **caractérisé en ce que** l'adhésif à l'état réticulé présente une deuxième T_{g} qui est inférieure à la première T_{g}.

11. Adhésif de polyuréthane à 2 composants selon l'une quelconque des revendications 1 à 10, **caractérisé en ce que** l'adhésif présente après réticulation un module d'élasticité supérieure à 1000 MPa à une température entre -10 °C et 70 °C.

12. Utilisation d'un adhésif de polyuréthane à 2 composants selon l'une quelconque des revendications 1 à 11, pour le collage de substrats en métal, en matière synthétique ou en mousse, ou de matériaux composites fibreux.

13. Utilisation selon la revendication 12, pour le collage d'éléments moulés à base de fibres de verre, de fibres de carbone, de fibres textiles dans une matrice de polyester ou de polyépoxyde.

14. Utilisation selon la revendication 12 ou 13, pour le collage d'éléments moulés possédant une surface inégale.
